# EUROPEAN PATENT SPECIFICATION

(11) **EP 0 375 138 B1**
(45) Date of publication and mention of the grant of the patent: **27.09.1995**
(21) Application number: 89311671.5
(22) Date of filing: 10.11.1989
(51) Int. Cl.: H04L 12/58, H04L 9/32

(54) **Restricting electronic message traffic**
Einschränkung von elektronischem Mitteilungsverkehr
Restriction pour trafic de messages électroniques

(30) Priority: 22.12.1988 US 288509
(43) Date of publication of application: 27.06.1990
(73) Proprietor: International Business Machines Corporation, Armonk, N.Y. 10504 (US)
(72) Inventor: Kasiraj, Chander, Grapevine Texas 76051 (US); Wolf, Timothy James, Bedford Texas 76021 (US)
(74) Representative: Bailey, Geoffrey Alan

(56) References cited:
- COMPUTER, vol. 18, no. 10, October 1985, LONG BEACH, US; pages 106-116; S. SAKATO et al.: 'A Distributed Interoffice Mail System'
- PROCEEDINGS OF THE NINTH INTERNATIONAL CONFERENCE ON COMPUTER COMMUNICATION, November 1988; TEL AVIV, IL; pages 470-475; D. TOUILLET: 'X.400 THE KEY FOR NEW NETWORKING APPLICATIONS THE EXAMPLE OF ATLAS 400'

## Description

This invention relates generally to restricting electronic message traffic in computer networks and in particular to methods for restricting the delivery and receipt of electronic messages transmitted to selected recipients via computer networks.

Electronic mail is rapidly supplanting Post Office mail as a means for communicating between individuals - see Sakata, S. et al. : A Distributed Interoffice Mail System, COMPUTER, Vol. 18, No, 10, Oct. 1985, Long Beach US, Pages 106 - 116. One significant advantage of electronic mail is that the transmission time associated with each electronic mail message is ordinarily only seconds, or fractions of a second, as compared to Post Office mail which ordinarily requires several days.

The mailing time associated with Post Office mail often causes significant delay in the conduct of business and has been largely ignored, and consequently tolerated, until the advent of Express Mail services and electronic mail. Currently, this widespread delay of business is identified as "float" and the minimising or eliminating of this float has become one goal of business managers, efficiency experts and others hoping to increase societal productivity.

The widespread use of electronic mail systems have given rise to a problem of security. That is, the worrisome problem of delivering a sensitive electronic mail message to the terminal of a third party only to have that message intercepted and read by another due to the lack of sufficient security at the recipient's terminal. Additionally, as electronic mail services have become more common, it may be likely that a particular recipient may become inundated with unwanted or insignificant messages to the point where important electronic messages are lost due to insufficient storage capability at the recipient's terminal.

Thus, it should be obvious that a need exists for a method whereby the delivery and receipt of sensitive electronic messages may be carefully restricted while permitting a recipient to easily control the receipt of messages by setting a pre-established criterion for delivery.

It is therefore one object of the present invention to provide an improved electronic message system.

The present invention provides a method for restricting the delivery and receipt of electronic messages, presumed unitary, or message components, in the case of multi-component messages, transmitted to selected recipients via a computer network, comprising the steps of:
transmitting an electronic message profile in association with each electronic message/message component transmitted via the computer network; and
automatically controlling the delivery and receipt of each electronic message/message component in response to the associated electronic message profile.

Such an arrangement is thought to provide an improved electronic message system which permits restriction of the delivery and receipt of sensitive electronic messages as by enabling a recipient to restrict the type and number of electronic messages which may be delivered to his or her terminal.

In one such disclosed arrangement, each individual electronic message or individual component of a multiple component electronic message is transmitted in association with an electronic message profile which may include restrictions designated by the transmitter with regard to the recipients security classification, management level or address. Preferably the electronic message profile will also include identifying information with regard to the source and the type of message associated therewith. Each electronic message profile is then used to automatically control the delivery and receipt of its associated electronic message by comparison with a recipient profile which was previously established. In this manner, a transmitter may specify that delivery of a selected electronic message should be automatically cancelled unless the recipient meets a specified security clearance, management level or other criterion. Similarly, a recipient may select a profile which precludes receipt of any electronic message which does not meet the previously established criterion for that recipient.

The present invention will be described further by way of example with reference to an embodiment thereof as illustrated in the accompanying drawings, in which:
Figure 1 is a block diagram of a Local Area Network (LAN) which links multiple users in a system wherein electronic messages may be transmitted;
Figure 2 is a logic flow chart illustrating the operation of the arrangement at the transmission system; and
Figure 3 is a logic flow chart illustrating the operation of the arrangement at the reception system.

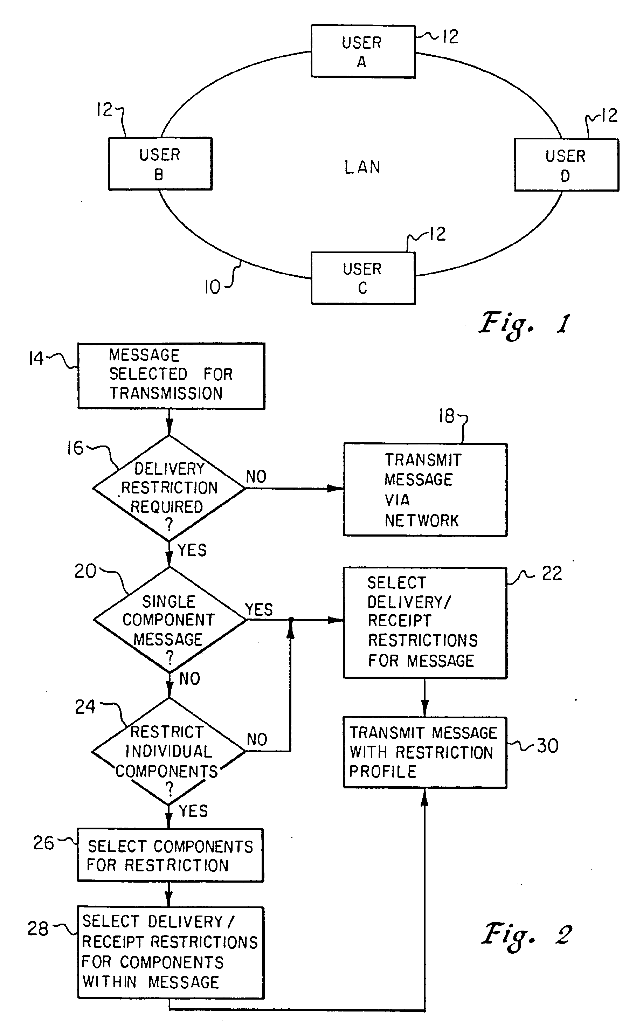

With reference now to the figures and in particular with reference to Figure 1, a Local Area Network (LAN) 10, which is a self-contained computer network, links a plurality of users. As is illustrated, Users A, B, C, and D are each linked in Local Area Network (LAN) 10 and are capable of freely communicating electronic message between one another within Local Area Network (LAN) 10. Those skilled in the art will appreciate that while a Local Area Network (LAN) is depicted in Figure 1 the electronic message method disclosed herein may be used with other such systems such as a plurality of interactive work stations which are each coupled to a host computer.

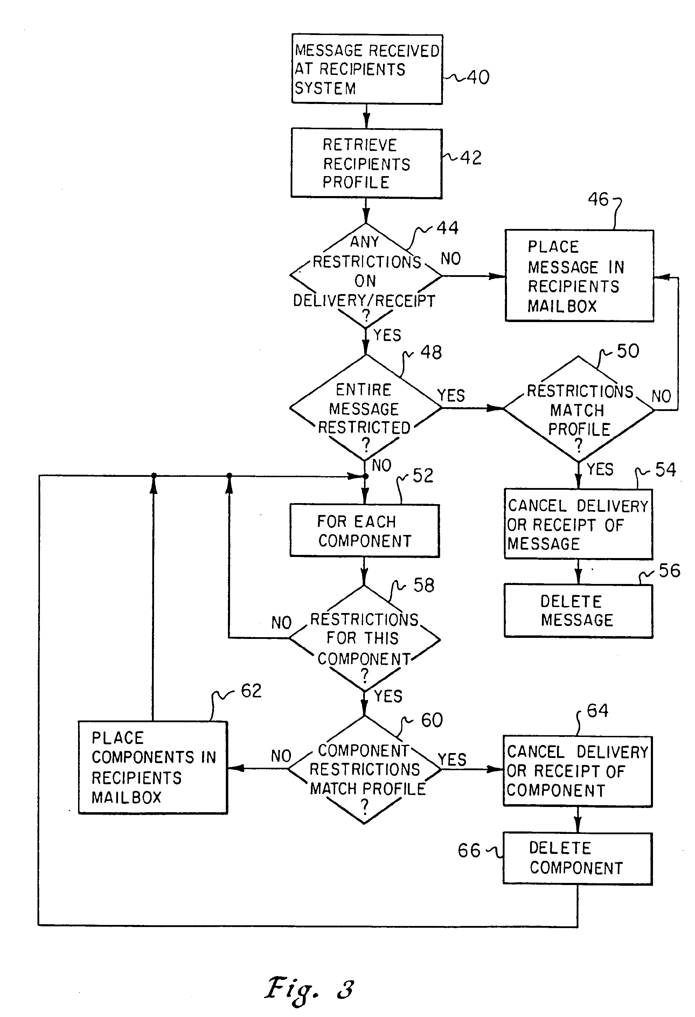

The operation of the disclosed arrangement permits a transmitter to restrict the delivery and receipt of selected electronic messages to a particular recipient only after verifying that the profile of that recipient meets certain criterion established for that particular message. It also permits a recipient of electronic mail to selectively determine the type and nature of electronic messages which may be received at his or her location. The operation, as a whole, may be regarded as a set of steps, some of which may be thought of as occurring at a "transmission system" (see Figure 2) and some of which may be thought of as occurring at a "reception system" (see Figure 3). Together, Figures 2 and 3 indicate one way whereby the delivery and receipt of electronic messages within a computer network may be restricted and controlled from both the transmission and reception systems. Additionally, each user depicted in Figure 1 may consist of an individual, or a computer system, such as a personal computer.

Referring now to Figure 2, as depicted in block 14, the disclosed operation begins by the selection of a particular message for transmission. Those skilled in the art will appreciate that the selection of a particular message for transmission involves not only the selection of the message content but also the specification of the recipient or recipients for that particular message. Therefore, the selection depicted in block 14 shall be assumed to include such specifications. Next, block 16 is used to illustrate whether or not a delivery restriction is required. If not, the particular message selected is transmitted via Local Area Network (LAN) 10 (see Figure 1) in a manner well known in the prior art, as illustrated in block 18.

In the event a delivery restriction for a particular message has been required, as determined by block 16, then block 20 is used to illustrate the determination of whether or not the message in question is a single component message. If the message selected for transmission with delivery restrictions is a single component message, then block 22 is used to illustrate the selection of the delivery/receipt restrictions for that message. Thereafter, the message is transmitted via Local Area Network (LAN) 10 with an associated restriction profile, as depicted in block 30.

In the event the message selected for transmission with restriction is not a single component message, as determined by block 20, then block 24 is used to illustrate a determination of whether or not individual components of the message are to be restricted. If no individual component of the message requires separate restriction, then the delivery/receipt restrictions which are necessary are selected, as described above with respect to block 22 and the message is transmitted along with its associated restriction profile, as illustrated in block 30.

However, in the event the transmitter desires to restrict individual components within the selected message, as determined by block 24, then block 26 illustrates the selection of these individual components for restriction. Next, block 28 depicts the selection of delivery/receipt restrictions for each individual component within the selected message, as desired by the transmitter. Thereafter the multiple component message is transmitted along with its associated restriction profile, as illustrated in block 30.

At the recipient system, the disclosed operation begins with the receipt of a particular message thereat, as illustrated in block 40.

Next, block 42 depicts the retrieval of the recipient's profile. The recipient's profile may include such information as the security clearance level of the recipient, the management level of the recipient, the recipient's address, information regarding whether or not the recipient has an affiliated user who has access to the recipient's electronic messages or, as specifically disclosed, information regarding whether or not the recipient desires to restrict the receipt of electronic messages at his system to messages which meet a particular criterion which the recipient has set.

Block 44 now illustrates a determination of whether or not any restrictions exist on the delivery or receipt of this particular message. It should be noted that such restrictions may be contained within the restriction profile associated with the particular message or may be generated as a result of the recipient profile which has been stored at the recipient's system. If no restrictions exist for delivery or receipt of this particular message, the message is placed within the recipient's electronic mail box, as depicted in block 46.

In the event there exist restrictions on the delivery or receipt of a particular electronic message then block 48 is used to determine whether or not the entire message is restricted. If the entire message is restricted, then block 50 depicts the determination of whether or not the restrictions contained within the message or the recipient's profile match this particular message. If not, as above, the message is placed within the recipient's electronic mail box, as illustrated in block 46.

In the event the restrictions contained within the associated restriction profile associated with the message, match the recipient's profile, or if the restrictions contained within the recipients profile match the message data, then block 54 illustrates the cancellation of delivery or receipt of that message and block 56 depicts the deletion of that message from the network.

Returning again to block 48, if a determination has been made that the entire message is not restricted, then block 52 illustrates an examination of each component within the message. Block 58 illustrates a determination of whether or not a restriction exists for a particular component within the message. If not, this determination is repeated for each component within a multiple component message, as illustrated by the logic flow chart of Figure 3.

In the event there exists a restriction for a particular component within the multiple component message which has been received, then block 60 is used to depict a determination of whether or not the restrictions for that component match either the recipient's profile or the associated restriction profile which has been transmitted with the message. If the restrictions do not match either profile then the component is placed within the recipient's mail box, as illustrated by block 62, and the process returns to block 52 to examine a subsequent component of the message.

However, in the event the component restrictions match the profile contained within recipient's profile, or the restrictions contained with the recipient's profile match the message data, then block 64 illustrates the cancellation of delivery or receipt of that particular component and block 66 illustrates the deletion of that component from the network. Finally, the process returns again to block 52 to continue to examine components of the received message until such time as each component has been examined.

As those skilled in the art will appreciate, by using such an arrangement, a predetermined delivery criterion may be established for each electronic message transmitted within an electronic computer network so that delivery of that message or individual component of that message may be automatically cancelled upon the failure of the recipient to meet such criteria. Further, by using a similar technique a recipient may easily restrict the type and number of electronic messages which he or she will permit to be placed within his or her electronic mail box, thus preserving memory space and the amount of time necessary to review electronic mail. Co-pending application EP-A-0 375 139 relates to similar subject matter.

## Claims

1. A method for restricting the delivery and receipt of electronic messages or message components, in the case of multi-component messages, transmitted to selected recipients via a computer network (10), comprising the steps of:
transmitting an electronic message profile in association with each electronic message/message component transmitted via the computer network (10); and
automatically controlling the delivery and receipt of each electronic message/message component in response to the associated electronic message profile.

2. A method as claimed in Claim 1, further including the step of generating a recipient profile for each recipient within the computer network (10).

3. A method as claimed in Claim 2, wherein the step of automatically controlling the delivery and receipt of each electronic message/message component in response to the associated electronic message profile comprises the step of comparing the electronic message profile with the recipient profile and automatically cancelling delivery and receipt of an electronic message/message component in response to variations therebetween.

4. A method as claimed in Claim 2 or Claim 3, wherein the step of generating a recipient profile for each recipient within the computer network (10) comprises the step of specifying for each recipient a selected class of electronic messages/message components for which delivery and receipt will be automatically cancelled.

5. A method as claimed in any of Claims 2 to 4, wherein the step of generating a recipient profile for each recipient within the computer network (10) comprises the step of specifying a security classification for each recipient wherein delivery and receipt of an electronic message/message component having an electronic message profile indicating a higher security classification will be automatically cancelled.

6. A method as claimed in any of Claims 2 to 5, wherein the step of generating a recipient profile for each recipient within the computer network (10) comprises the step of specifying the management level of each recipient wherein delivery and receipt of an electronic message profile indicating an inconsistent management level will be automatically cancelled.

## Patentansprüche

1. Verfahren zum Einschränken der Lieferung und des Empfangs von elektronischen Mitteilungen oder, im Falle von aus mehreren Komponenten bestehenden Mitteilungen, Komponenten elektronischer Mitteilungen, die über ein Computernetz (10) an ausgewählte Empfänger übertragen werden, wobei das Verfahren die Schritte umfaßt:
zum Übertragen eines elektronischen Mitteilungsprofils in Verbindung mit jeder elektronischen Mitteilung/Mitteilungskomponente, die über das Computernetz (10) übertragen wird; und
zum automatischen Kontrollieren der Lieferung und des Empfangs jeder elektronischen Mitteilung/Mitteilungskomponenten in Erwiderung des zugehörigen elektronischen Mitteilungsprofils.

2. Verfahren nach Anspruch 1, das desweiteren den Schritt der Generierung eines Empfängerprofils für jeden Empfänger innerhalb des Computernetzes (10) umfaßt.

3. Verfahren nach Anspruch 2, bei dem der Schritt der automatischen Kontrolle der Lieferung und des Empfangs jeder elektronischen Mitteilung/Mitteilungskomponenten in Erwiderung des zugehörigen elektronischen Mitteilungsprofils den Schritt umfaßt, in dem das elektronische Mitteilungsprofil mit dem Empfängerprofil verglichen wird und in dem automatisch die Lieferung und der Empfang einer elektronischen Mitteilung/Mitteilungskomponenten in Erwiderung von Abweichungen zwischen beiden Profilen abgebrochen wird.

4. Verfahren nach Anspruch 2 oder 3, wobei der Schritt der Generierung eines Empfängerprofils für jeden Empfänger innerhalb des Computernetzes (10) den Schritt umfaßt, in dem für jeden Empfänger eine ausgewählte Klasse von elektronischen Mitteilungen/Mitteilungskomponenten angegeben werden, für die die Lieferung und der Empfang automatisch abgebrochen werden.

5. Verfahren nach einem der Ansprüche 2 bis 4, wobei der Schritt der Generierung eines Empfängerprofils für jeden Empfänger innerhalb des Computernetzes (10) den Schritt umfaßt, in dem eine Sicherheitsklassifikation für jeden Empfänger angegeben wird, wodurch die Lieferung und der Empfang einer elektronischen Mitteilung/Mitteilungskomponenten mit einem elektronischen Mitteilungsprofil, das eine höhere Sicherheitsklassifikation anzeigt, automatisch abgebrochen werden.

6. Verfahren nach einem der Ansprüche 2 bis 5, wobei der Schritt der Generierung eines Empfängerprofils für jeden Empfänger innerhalb des Computernetzes (10) einen Schritt umfaßt, in dem die Führungsebene jedes Empfängers angegeben wird, wodurch die Lieferung und der Empfang eines elektronischen Mitteilungsprofils, das auf eine inkonsistente Führungsebene hinweist, automatisch abgebrochen werden.

## Revendications

1. Procédé pour restreindre la livraison et la réception de messages électroniques ou des composants d'un message, dans le cas de messages à plusieurs composants, transmis à des destinataires sélectionnés via un réseau d'ordinateurs (10), comprenant les étapes suivantes :
transmission d'un profil de message électronique associé à chaque message électronique / composant de message transmis via le réseau d'ordinateurs (10) ; et
contrôle automatique de la livraison et de la réception de chaque message électronique / composant de message en réponse au profil du message électronique associé.

2. Procédé tel que revendiqué dans la revendication 1, incluant en outre l'étape de production d'un profil de destinataire pour chaque destinataire à l'intérieur du réseau d'ordinateurs (10).

3. Procédé tel que revendiqué dans la revendication 2, dans lequel l'étape de contrôle automatique de la livraison et de la réception de chaque message électronique / composant de message en réponse au profil de message électronique associé comprend l'étape de comparaison du profil du message électronique avec le profil du destinataire et d'annulation automatique de la livraison et de la réception d'un message électronique / composant de message en réponse aux variations entre eux.

4. Procédé tel que revendiqué dans la revendication 2 ou 3, dans lequel l'étape de production d'un profil de destinataire pour chaque destinataire à l'intérieur du réseau d'ordinateurs (10) comprend l'étape de spécification, pour chaque destinataire, d'une classe sélectionnée de messages électroniques / composants de message pour lesquels la livraison et la réception seront automatiquement annulées.

5. Procédé tel que revendiqué dans l'une quelconques des revendications 2 à 4, dans lequel l'étape de production d'un profil de destinataire pour chaque destinataire à l'intérieur du réseau d'ordinateurs (10) comprend l'étape de spécification d'une classification de sécurité pour chaque destinataire dans laquelle la livraison et la réception d'un message électronique / composant de message ayant un profil de message électronique indiquant une classification de sécurité supérieure seront automatiquement annulées.

6. Procédé tel que revendiqué dans l'une quelconque des revendications 2 à 5, dans lequel l'étape de production d'un profil de destinataire pour chaque destinataire à l'intérieur du réseau d'ordinateurs (10) comprend l'étape de spécification du niveau de management de chaque destinataire dans laquelle la livraison et la réception d'un profil de message électronique indiquant un niveau de management incohérent seront automatiquement annulées.
